# EUROPÄISCHE PATENTSCHRIFT

(11) **EP 3 418 026 B1**
(45) Veröffentlichungstag und Bekanntmachung des Hinweises auf die Patenterteilung: **05.08.2020**
(21) Anmeldenummer: 18179185.6
(22) Anmeldetag: 21.06.2018
(51) Int. Cl.: B29C 45/27

(54) **VERTEILEREINRICHTUNG FÜR EINE SPRITZGIESSDÜSE, SPRITZGIESSDÜSE MIT VERTEILEREINRICHTUNG UND SPRITZGIESSWERKZEUG MIT SPRITZGIESSDÜSE UND VERTEILEREINRICHTUNG**
MANIFOLD DEVICE FOR AN INJECTION MOLDING NOZZLE, INJECTION MOLDING NOZZLE WITH MANIFOLD DEVICE AND INJECTION MOLDING TOOL WITH INJECTION MOLDING NOZZLE AND MANIFOLD DEVICE
DISPOSITIF DE DISTRIBUTEUR POUR UNE BUSE DE MOULAGE PAR INJECTION, BUSE DE MOULAGE PAR INJECTION AVEC DISPOSITIF DE DISTRIBUTEUR ET OUTIL DE MOULAGE PAR INJECTION AVEC BUSE DE MOULAGE PAR INJECTION ET DISPOSITIF DE DISTRIBUTEUR

(30) Priorität: 22.06.2017 DE 102017113885
(43) Veröffentlichungstag der Anmeldung: 26.12.2018
(73) Patentinhaber: GÜNTHER Heisskanaltechnik GmbH, 35066 Frankenberg (DE)
(72) Erfinder: Günther, Herbert, 35108 Allendorf (DE); Sommer, Siegrid, 35099 Burgwald (DE); Schnell, Torsten, 35104 Lichtenfels (DE)
(74) Vertreter: Patentanwälte Olbricht Buchhold Keulertz

(56) Entgegenhaltungen:
- DE-A1-102007 059 545
- JP-A- S55 140 537
- US-A1- 2011 287 129

## Beschreibung

Die Erfindung betrifft eine Verteilereinrichtung für eine Spritzgießdüse eines Spritzgießwerkzeugs mit einem sich von einer Eintrittsöffnung in die Verteilereinrichtung bis zu wenigstens zwei Übergabeöffnungen erstreckenden Hauptverteilerkanal für eine Spritzgießmasse und zumindest zwei sich jeweils von einer Übergabeöffnung zu einer Austrittsöffnung erstreckenden Verteilerkanälen, die jeweils mit einer Übergabeöffnung mit dem Hauptverteilerkanal strömungsverbunden sind. Des Weiteren betrifft die Erfindung eine Spritzgießdüse mit einer solchen Verteilereinrichtung sowie ein Spritzgießwerkzeug mit einer solchen Spritzgießdüse.

Bei der Herstellung von Kunststoffteilen mit Hilfe von Spritzgusstechniken ist es häufig von Vorteil, die Formkavitäten von der Seite anzuspritzen. Hierfür geeignete Spritzgießdüsen und Spritzgießwerkzeuge sind daher im Stand der Technik in verschiedenen Ausgestaltungen bekannt.

DE 20 2008 005 073 U1 offenbart beispielsweise eine Heißkanaldüse für die seitliche Anspritzung von Kunststoffbauteilen, mit einem mehrteiligen Düsenkörper, in dem ein Schmelzekanal ausgebildet ist, der im unteren Bereich des Düsenkörpers in mehrere schräg nach außen verlaufende Teilkanäle verzweigt ist. Jeder Teilkanal mündet innerhalb einer Ausnehmung im Düsenkörper in einer schrägen Fläche, auf der ein Spitzeneinsatz aufgesetzt ist. Dieser hat einen Grundkörper mit einer schrägen Dichtfläche, in der eine Eintrittsöffnung für den Teilkanal ausgebildet ist Des Weiteren hat der Düsenkörper einen zylindrischen Abschnitt, an dessen Ende das Mundstück ausgebildet ist. Die Spitzeneinsätze sind mit den Mundstücken radial nach außen gerichtet.

EP 1 524 091 A2 beschreibt ebenfalls eine Spritzgießdüse für ein Spritzgießwerkzeug mit einem Materialrohr, in dem ein axial verlaufender Strömungskanal endseitig in mehrere schräg nach außen gerichtete Umlenkkanäle aufgeteilt ist. Diese münden in radial angeordneten seitlichen Ausnehmungen, die in einer Seitenwandung des Materialrohrs ausgebildet sind. In dessen Boden befindet sich eine weitere polygonale Ausnehmung, die über radiale Bohrungen mit den seitlichen Ausnehmungen des Materialrohrs und über diese mit der Umfangsfläche des Materialrohrs verbunden ist. In die radialen Bohrungen werden nach außen gerichtete Mundstücke eingesteckt und innerhalb der Ausnehmung von einem Befestigungselement gesichert. Die Mundstücke ragen über die Umfangsfläche des Materialrohrs hinaus und werden innerhalb der radialen Öffnungen von der aus den Umlenkkanälen austretenden fließfähigen Masse umströmt.

Auch hier müssen die Umlenkkanäle als Schrägbohrungen von unten in das Materialrohr eingebracht werden, was fertigungstechnisch aufwendig ist. Ein weiterer Nachteil der zuvor beschriebenen Spritzgießdüse besteht darin, dass die Anzahl und die Anordnung der Mundstücke nicht variierbar sind, da diese durch die Anzahl und die Anordnung der in dem Materialrohr ausgebildeten Umlenkkanäle und Durchgangsbohrungen festgelegt sind. Damit kann die Spritzgießdüse nicht an verschiedenartige Aufgaben angepasst werden, beispielsweise, wenn sich die Anzahl und/oder der Abstand der Angusspunkte ändert, die Düse ist entsprechend nur beschränkt einsetzbar und es muss für jedes Spritzgießwerkzeug ein spezielles Materialrohr gefertigt werden, was wiederum mit hohen Kosten verbunden ist.

Um den Aufbau einer solchen Spritzgießdüse zu vereinfachen, sieht die EP 2 177 339 A1 vor, dass jede Düsenspitze in einer Aufnahmeeinrichtung angeordnet ist. die separat vom Düsenkörper ausgebildet ist, und dass jede Düsenspitze mittels einer als Halteelement ausgebildeten Verteilereinrichtung lösbar in der separaten Aufnahmeeinrichtung festlegbar ist. Das Halteelement hat einen Hauptverteilerkanal, der den Strömungskanal des Düsenkörpers fortsetzt und sich in mehrere Verteilerkanäle aufteilt, die die zu verarbeitende Spritzgießmasse jeweils über Austrittsöffnungen Mundstücken zuführt. Die Verteilerkanäle erstrecken sich sternförmig vom Hauptverteilerkanal weg.

Die mögliche Anzahl der Verteilerkanäle ist aber begrenzt, da mit zunehmender Anzahl der Verteilerkanäle die Wandstärke zwischen den Verteilerkanälen, insbesondere im Bereich der Übergangsöffnungen vom Hauptverteilerkanal zu den Verteilerkanälen abnimmt, wodurch die Stabilität der Verteilereinrichtung ab einer bestimmten Anzahl von Verteilerkanälen abnimmt. Bei einer großen Anzahl von Verteilerkanälen würden sich diese zudem im Bereich der Übergabeöffnungen überschneiden, so dass es zu weiteren Materialschwächungen kommen würde. Eine Erhöhung der Anzahl der Verteilerkanäle wäre also nur mit einer Vergrößerung des Durchmessers bzw. des Umfangs des Hauptverteilerkanals möglich, um in Umfangsrichtung eine ausreichend große Fläche für die Anordnung der Übergabeöffnungen bereitstellen zu können.

DE 10 2007 059545 A1 offenbart eine Verteilereinrichtung für eine Spritzgießdüse für ein Spritzgießwerkzeug mit einem sich von einer Eintrittsöffnung in die Verteilereinrichtung bis zu wenigstens zwei Übergabeöffnungen erstreckenden Hauptverteilerkanal für eine Spritzgießmasse. Der Düseneinsatz hat ferner zwei sich jeweils von einer Übergabeöffnung (Abgabeschmelzekanal) zu einer Austrittsöffnung erstreckende Verteilerkanäle, die jeweils mit einer Übergabeöffnung mit dem Hauptverteilerkanal strömungsverbunden sind, wobei die Übergabeöffnungen in Längsrichtung des Hauptverteilerkanals auf wenigstens zwei unterschiedlichen Höhen in den Hauptverteilerkanal münden.

JP S55 140537 A und US 2011/287129 offenbaren ebenfalls Ausführungsformen einer solchen Verteilereinrichtung.

Aufgabe der Erfindung ist es, eine Verteilereinrichtung für eine Spritzgießdüse, eine Spritzgießdüse sowie ein Spritzgießwerkzeug bereitzustellen, die eine verbesserte Stabilität aufweisen.

Hauptmerkmale der Erfindung sind im kennzeichnenden Teil von Anspruch 1 angegeben. Ausgestaltungen sind Gegenstand der Ansprüche 2 bis 12. Die Erfindung betrifft weiterhin eine Spritzgießdüse mit der Verteilereinrichtung gemäß Anspruch 13 mit Ausgestaltungen nach den Ansprüchen 14 bis 15 sowie ein Spritzgießwerkzeug gemäß Anspruch 16 mit einer solchen Spritzgießdüse.

Bei einer Verteilereinrichtung für eine Spritzgießdüse für ein Spritzgießwerkzeug, mit einem sich von einer Eintrittsöffnung in die Verteilereinrichtung bis zu wenigstens zwei Übergabeöffnungen erstreckenden Hauptverteilerkanal für eine Spritzgießmasse und mit zumindest zwei sich jeweils von einer Übergabeöffnung zu einer Austrittsöffnung erstreckenden Verteilerkanälen, die jeweils mit einer Übergabeöffnung mit dem Hauptverteilerkanal strömungsverbunden sind, wobei die Übergabeöffnungen in Längsrichtung des Hauptverteilerkanals auf wenigstens zwei unterschiedlichen Höhen in den Hauptverteilerkanal münden, und wobei die Übergabeöffnungen auf zwei in Längsrichtung des Hauptverteilerkanals voneinander beabstandeten Ebenen in den Hauptverteilerkanal münden, sieht die Erfindung vor, dass sich die Austrittsöffnungen in Längsrichtung des Hauptverteilerkanals zwischen den Ebenen der Übergabeöffnungen befinden.

Die Verteilerkanäle erstrecken sich damit in vorteilhafter Weise nicht auf einer gemeinsamen Ebene vom Hauptverteilerkanal weg, sondern in Längsrichtung auf verschiedenen Höhen. Dadurch ist der Abstand der einzelnen Verteilerkanäle, insbesondere der Abstand von in Umfangsrichtung benachbarten Verteilerkanälen und somit die Wandstärke zwischen den Verteilerkanälen größer dimensionierbar. Aufgrund der größeren Materialdicke zwischen den Verteilerkanälen ist die Verteilereinrichtung bei gleicher Anzahl der Verteilerkanäle stabiler bzw. können bei gleicher Stabilität mehr Verteilerkanäle vorgesehen werden. Des Weiteren kann der Hauptverteilerkanal einen kleineren Umfang aufweisen, da in Umfangsrichtung weniger Übergabeöffnungen auf einer Ebene angeordnet werden bzw. die Übergabeöffnungen nicht nur in Umfangsrichtung, sondern auch in Längsrichtung des Hauptverteilerkanals angeordnet werden können.

Dadurch, dass sich die Austrittsöffnungen in Längsrichtung des Hauptverteilerkanals zwischen den Ebenen der Übergabeöffnungen befinden, steigen die Verteilerkanäle, deren Übergabeöffnungen sich in einer der beiden Ebenen befinden, in Längsrichtung von den Austrittsöffnungen zu den Übergabeöffnungen an. Die Verteilerkanäle, deren Übergabeöffnungen sich in der anderen der beiden Ebenen befinden, steigen von den Übergabeöffnungen in Richtung der Austrittsöffnungen entgegen der Längsrichtung an. In Umfangsrichtung benachbarte Verteilerkanäle steigen somit in entgegengesetzte Richtungen von den Austrittsöffnungen zu den Übergabeöffnungen an, wodurch sich diese in Längsrichtung voneinander entfernen. Dadurch sind die Übergabeöffnungen dieser Verteilerkanäle möglichst weit voneinander entfernt, so dass eine möglichst große Wandstärke zwischen den Verteilerkanälen bereitgestellt wird.

Vorzugsweise sind in Umfangsrichtung benachbarte Übergabeöffnungen auf verschiedenen Höhen angeordnet. Bevorzugt münden die benachbarten Übergabeöffnungen auf verschiedenen Höhen in den Hauptverteilerkanal. Dadurch ist sichergestellt, dass sich in Umfangsrichtung benachbarte Verteilerkanäle nicht auf einer Höhe befinden, wodurch der Abstand zwischen diesen Verteilerkanälen sehr gering wäre, was zu einer verringerten Wanddicke in diesem Bereich führen würde.

Die Übergabeöffnungen können beliebig auf dem Außenumfang des Hauptverteilerkanals angeordnet sein. Vorzugsweise sind diese aber in Umfangsrichtung in einem regelmäßigen, sich wiederholenden Muster, vorzugsweise in gleichem Winkelabstand angeordnet, so dass eine gleichmäßige Stabilität der Verteilereinrichtung gewährleistet ist. Hierbei liegen die Übergabeöffnungen von in Umfangsrichtung benachbarten Verteilerkanälen in verschiedenen Ebenen.

Eine weitere vorteilhafte Ausgestaltung der Erfindung sieht vor, dass sich die Übergabeöffnungen auf dem Innenumfang des Hauptverteilerkanals nicht überlappen. Dies gilt sowohl für die Übergabeöffnungen, die in einer Ebene angeordnet sind, als auch für die Übergabeöffnungen, die in unterschiedlichen Ebenen angeordnet sind.

Vorzugsweise sind bei eine weiteren vorteilhaften Ausführungsform der Erfindung die Anzahl der Übergabeöffnungen, die jeweils auf einer Ebene in den Hauptverteilerkanal münden, gleich groß, so dass die Übergabeöffnungen der Verteilerkanäle in Umfangsrichtung wechselweise in der ersten und der zweiten Ebene liegen.

Die Ebenen, in welchen die Übergabeöffnungen in den Hauptverteilerkanal münden, können beliebig angeordnet sein. Vorzugsweise sind die Ebenen parallel zueinander angeordnet, so dass der Abstand der in Umfangsrichtung benachbarten Übergabeöffnungen in Längsrichtung stets gleich groß ist. Bevorzugt sind die Ebenen ferner senkrecht zur Längsrichtung des Hauptverteilerkanals angeordnet.

Die Austrittsöffnungen können beliebig angeordnet sein. Vorzugsweise sind die Austrittsöffnungen aber in einer Ebene angeordnet. Dadurch ergibt sich der Vorteil, dass ein Schmelzefluss durch den Hauptverteilerkanal und die Verteilerkanäle für alle möglichen Wege weitestgehend gleichmäßig ist.

Die Ebene der Austrittsöffnungen kann senkrecht zur Längsrichtung des Hauptverteilerkanals angeordnet ist, so dass der Abstand der Austrittsöffnungen von den Übergabeöffnungen einer Ebene in Längsrichtung stets gleich groß ist.

Beispielsweise sind die Austrittsöffnungen in Umfangsrichtung gleichmäßig auf einer Ebene verteilt. Ein solcher, symmetrischer Aufbau erleichtert die Montage der Verteilereinrichtung, da das Ausrichten der Verteilereinrichtung einfacher ist.

Die Abstände der Austrittsöffnungen zu den beiden Ebenen der Übergabeöffnungen in Längsrichtung des Hauptverteilerkanals können betragsmäßig gleich groß sein. Das heißt, die Austrittsöffnungen befinden sich mittig zwischen den Ebenen der Übergabeöffnungen. Auf diese Weise haben die Verteilerkanäle zu ersten und zweiten Ebene, sowie zur Längsrichtung jeweils im Wesentlichen mit dem gleichen Winkelbetrag bzw. die gleiche Neigung.

Optional kann die Position der Ausgabeöffnungen auch so gewählt sein, dass die Länge des Durchflussweges für alle Verteilerkanäle gleich lang ist. Beispielsweise können die Verteilerkanäle, deren Übergabeöffnungen weiter von der Eintrittsöffnung entfernt sind, Um den Betrag des Abstandes von den Übergabeöffnungen, die näher an der Eintrittsöffnung liegen, kürzer sein. Dadurch ist die Durchflusszeit der Spritzgießmasse durch alle Verteilerkanäle gleich lang. Falls die Spritzgießmasse sich innerhalb der Spritzgießdüse abkühlt, erfolgt der Austritt der Spritzgießmasse aufgrund der gleich langen Fließwege an allen Austrittsöffnungen mit der gleichen Temperatur.

Die Austrittsöffnungen sind vorzugsweise bezüglich des Hauptverteilerkanals in Umfangsrichtung gleichmäßig verteilt angeordnet, um Materialschwächungen aufgrund von zu nah beieinanderliegenden benachbarten Kanälen zu vermeiden.

Die Verteilereinrichtung weist beispielsweise eine polygonale Außenform auf, wobei jede Austrittsöffnung an einer Teilfläche der polygonalen Außenform vorgesehen ist. Die polygonale Außenform bildet in Kombination mit einer entsprechend ausgebildeten Aufnahme an der Spritzgießdüse eine Verdrehsicherung bzw. eine Zentrierhilfe für die Verteilereinrichtung. Vorzugsweise weist die Verteilereinrichtung eine regelmäßige polygonale Außenform auf, wobei die Austrittsöffnungen jeweils an der gleichen Position einer Teilfläche vorgesehen sind. Dadurch kann die Verteilereinrichtung beliebig in die Aufnahme eingesetzt werden, solange die polygonale Außenform entsprechend zur Aufnahme ausgerichtet ist.

Die Verteilereinrichtung kann entgegen der Längsrichtung zur Eintrittsöffnung hin konisch zulaufend ausgebildet sein, so dass sich diese beim Einschieben in die Aufnahme zentriert bzw. beim Einschieben in eine Aufnahmeeinrichtung geklemmt wird. Optional kann die Verteilereinrichtung aber auch in Längsrichtung zumindest abschnittsweise einen gleichbleibenden Außenquerschnitt aufweisen.

An den Austrittsöffnungen sind beispielsweise jeweils Aufnahmen für Mundstücke der Spritzgießdüse vorgesehen, in denen die Mundstücke gehalten oder fixiert werden können. Die Mundstücke können gemäß einer Ausgestaltung in den Aufnahmen fixierbar sein.

Optional kann ein entgegen der Längsrichtung ragender Halsabschnitt vorgesehen sein, an dem die Eintrittsöffnung vorgesehen ist.

Zur Lösung der Aufgabe ist des Weiteren eine Spritzgießdüse für ein Spritzgießwerkzeug vorgesehen, mit einem Düsenkörper und mit wenigstens zwei Mundstücken, die jeweils über eine Austrittsöffnung mit einer in einem Formeinsatz ausgebildeten Formkavität des Spritzgießwerkzeugs strömungsverbunden sind, wobei in dem Düsenkörper ein Strömungskanal für eine zu verarbeitende Spritzgießmasse ausgebildet ist, und mit einer vorstehend beschriebenen Verteilereinrichtung. Der Strömungskanal mündet in den Hauptverteilerkanal der Verteilereinrichtung und die Verteilerkanäle münden jeweils in ein Mundstück.

Die Mundstücke sind beispielsweise in einer separat vom Düsenkörper ausgebildeten Aufnahmeeinrichtung angeordnet und die Verteilereinrichtung bildet ein Halteelement, das die Mundstücke lösbar in der separaten Aufnahmeeinrichtung festlegt.

Durch diese Anordnung ist es möglich, die Mundstücke jederzeit rasch und bequem auswechseln zu können, ohne die gesamte Spritzgießdüse ausbauen zu müssen. Überdies besteht die Möglichkeit, die separat vom Düsenkörper ausgebildete Aufnahmeeinrichtung vollständig auszuwechseln. Dadurch kann die Spritzgießdüse mit nur wenigen Handgriffen an unterschiedliche Aufgaben und Bedürfnisse angepasst werden. So lässt sich beispielsweise der Abstand oder die Lage der Mundstücke jederzeit ändern. Außerdem kann bequem die Anzahl der Mundstücke erhöht werden, indem einfach eine entsprechende Aufnahmeeinrichtung am Düsenkörper montiert wird. Dazu muss lediglich die bisherige Aufnahmeeinrichtung vom Düsenkörper abgenommen und eine neue oder andere Aufnahmeeinrichtung montiert werden. Ein Ausbau der kompletten Düse ist nicht erforderlich, was sich günstig auf die Rüstzeit der Spritzgussanlage auswirkt. Auch die Werkzeugkosten werden deutlich verringert, weil der Rest der Spritzgießdüse stets weiterverwendet werden kann.

Die Verteilereinrichtung kann die Aufnahmeeinrichtung durchragen und längsverschieblich in dem Düsenkörper geführt sein. Damit wird die Aufnahmeeinrichtung über die Verteilereinrichtung mit dem Düsenkörper verbunden, wobei jedoch keine starre bzw. feste Verbindung entsteht. Die Verteilereinrichtung kann sich vielmehr relativ zum Düsenkörper bewegen, so dass die unterschiedlichen Wärmeausdehnungen der verschiedenen Bauteile der Spritzgießdüse beim Aufheizen und Abkühlen des Werkzeugs stets ausgeglichen werden, ohne dass es zu Undichtigkeiten während des Betriebes kommt.

Die Verteilereinrichtung weist hierzu vorzugsweise einen Halsabschnitt auf, der längsverschieblich in den Strömungskanal des Düsenkörpers hineinragt, wobei der Hauptverteilerkanal in dem Halsabschnitt ausgebildet ist.

Die Aufnahmeeinrichtung kann eine Ausnehmung aufweisen, in welche die Verteilereinrichtung einsetzbar ist. Die Ausnehmung weist beispielsweise eine polygonartige Innenfläche und die Verteilereinrichtung eine formgleiche polygonartige Seitenfläche auf. Die Innenfläche der Aufnahmeeinrichtung und die Außen- bzw. Seitenfläche des Haltelements weisen mithin abschnittsweise glatte und ebene Flächen auf, die eine zuverlässige, und dauerhaft dichte Anordnung der Mundstücke innerhalb der Aufnahmeeinrichtung ermöglichen.

Zur Aufnahme der Mundstücke hat die Aufnahmeeinrichtung quer zur Axialrichtung des Düsenkörpers Bohrungen, in welche die Mundstücke einsetzbar oder einsteckbar sind. Letztere können mithin von innen in die Aufnahmeeinrichtung eingesetzt werden, was sich ebenfalls günstig auf die Handhabung der Spritzgießdüse auswirkt. Letztere kann selbst bei engen Platzverhältnissen im Werkzeug montiert werden, weil die gewöhnlich über die Außenabmessungen des Düsenkörpers bzw. des Düsengehäuses hinausragenden Mundstücke nachträglich eingesetzt werden können. Geteilte Werkzeugplatten sind daher nicht notwendig.

Bei der Montage werden die Mundstücke einfach von der Innenseite der Ausnehmung her durch die Radialbohrungen der Aufnahmeeinrichtung hindurch gesteckt. Anschließend wird von unten die Verteilereinrichtung eingesetzt, die mit ihrem Halsabschnitt durch die Aufnahmeeinrichtung hindurch in den Strömungskanal des Düsenkörpers bzw. des Materialrohrs eingreift. Ein an den Halsabschnitt anschließender Sockelabschnitt des Halteelements sichert die Mundstücke innerhalb der Aufnahmeeinrichtung, so dass diese sich nicht mehr radial nach innen bewegen können. Die Mundstücke werden mithin von dem Halteelement innerhalb der Aufnahmeeinrichtung lagefixiert.

Vorzugsweise stützt sich jedes Mundstück innerhalb der Ausnehmung an der Innenfläche der Aufnahmeeinrichtung und an der Seitenfläche der Verteilereinrichtung ab, wobei jedes Mundstück dichtend an der Seitenfläche des Halteelements anliegt. Die polygonartigen Flächen von Aufnahmeeinrichtung und Halteelement sorgen dabei für eine optimale Dichtwirkung. Ergänzend kann zwischen jedem Mundstück und der Verteilereinrichtung eine Dichtung vorgesehen sein, um zu verhindern, dass in diesen Bereichen Spritzgießmasse austreten kann.

Eine weitere wichtige Ausgestaltung der Erfindung sieht vor, dass der Strömungskanal und/oder die Aufnahmeeinrichtung mit einer Heizung versehen sind. Hierbei kann es sich um eine gewöhnliche Heizwendel handeln, die in einer Nut im Außenumfang der Aufnahmeeinrichtung eingebracht ist. Daher kann auch eine Dickschichtheizung verwendet werden, die auf einer der Außenflächen und/oder der Innenflächen der Aufnahmeeinrichtung aufgebracht ist. Die Heizung verhindert ein Abkühlen der Spritzgießmasse, so dass diese stets eine für die Verarbeitung erforderliche Temperatur aufweist.

Mit Vorteil ist die Verteilereinrichtung längsverschieblich in der Aufnahmeeinrichtung angeordnet. Dadurch besteht die Möglichkeit, die Verteilereinrichtung und/oder die Mundstücke gegenüber der Aufnahmeeinrichtung zu justieren, um beispielsweise die Mundstücke gegenüber dem Werkzeug ausrichten zu können. Hierzu ist eine Justiereinrichtung für die Verteilereinrichtung vorgesehen, die vorzugsweise von außen zugänglich ist.

Um dabei unerwünschte Verschiebungen von Verteilereinrichtung, Düsenkörper und Aufnahmeeinrichtung zueinander zu verhindern ist es vorteilhaft, wenn die Verteilereinrichtung und das Materialrohr, bzw. die Aufnahmeeinrichtung und die Verteilereinrichtung, bzw. die Aufnahmeeinrichtung und das Materialrohr jeweils verdrehsicher relativ zueinander angeordnet sind, d.h. zwischen der Aufnahmeeinrichtung, der Verteilereinrichtung und/oder dem Düsenkörper ist eine Verdrehsicherung ausgebildet oder angeordnet. Die Mundstücke, die Verteilereinrichtung und die Aufnahmeeinrichtung können eine vormontierte Baueinheit sein, die schnell montierbar ist.

Zur Lösung der Aufgabe ist des Weiteren ein Spritzgießwerkzeug mit einer solchen Spritzgießdüse vorgesehen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Schnittansicht einer Ausführungsform einer Spritzgießdüse aus dem Stand der Technik;
- Fig. 2: eine perspektivische Außenansicht der erfindungsgemäßen Verteilereinrichtung;
- Fig. 3: eine teiltransparente Ansicht der Verteilereinrichtung gemäß Fig. 2;
- Fig. 4: eine geschnittene, teiltransparente Ansicht der erfindungsgemäßen Verteilereinrichtung;
- Fig. 5: eine teiltransparente Seitenansicht der erfindungsgemäßen Verteilereinrichtung und
- Fig. 6: eine senkrecht zur Längsrichtung geschnittene, teiltransparente Ansicht der erfindungsgemäßen Verteilereinrichtung.

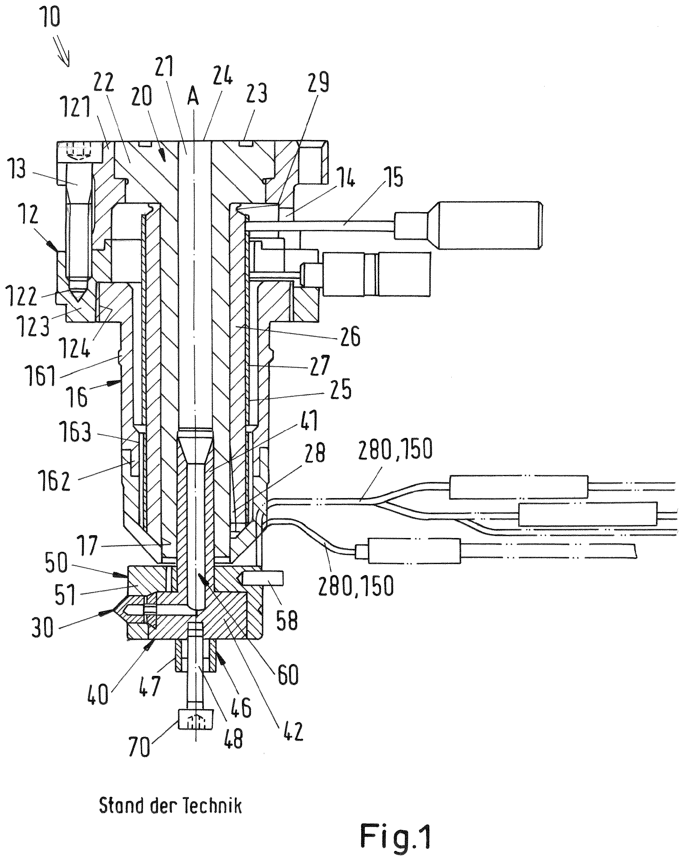

Die in der Figur 1 dargestellte Spritzgießdüse 10 ist zum Einsetzen in ein Spritzgießwerkzeug bestimmt. Dieses dient zur Herstellung von Formteilen aus einer fließfähigen Masse, wie beispielsweise aus einer Kunststoffschmelze oder dergleichen. Das Spritzgießwerkzeug hat gewöhnlich eine Aufspannplatte sowie parallel dazu eine Verteilerplatte, in der ein System von Strömungskanälen ausgebildet ist. Diese münden in Spritzgießdüsen 10, die beispielsweise als Heißkanaldüsen ausgebildet sind.

Die Fig. 1 gezeigte Spritzgießdüse 10 umfasst einen Düsenkörper 20 in Form eines Materialrohrs, das an seinem oberen Ende mit einem flanschartigen Anschlusskopf 22 versehen ist, der mit Hilfe eines Dichtringes 23 gegenüber der (nicht dargestellten) Verteilerplatte abgedichtet ist. Das Materialrohr 20 sitzt lösbar in einem Schaft 16. Der Schaft 16 und der Anschlusskopf 22 des Materialrohres 20 werden wiederum von einem Gehäuse 12 gehalten. In das Materialrohr 20 ist mittig ein Strömungskanal 21 für eine Materialschmelze eingebracht, der sich in der axialen Richtung A erstreckt. Der bevorzugt als Bohrung ausgebildete Strömungskanal 21 besitzt im Anschlusskopf 22 eine Materialzufuhröffnung 24, über die dem Strömungskanal 21 die von der Verteilerplatte kommende Materialschmelze zugeführt wird.

Man erkennt, dass es sich bei der in Fig. 1 dargestellten Düse um eine übliche Heißkanaldüse handelt. In das untere Ende des Materialrohrs 20 ist eine nachfolgend im Detail beschriebene Verteilereinrichtung 40 eingesetzt, die mit einem Halsabschnitt 41 längsverschieblich in den Strömungskanal 21 des Materialrohrs 20 hineinragt. Die Verteilereinrichtung 40 dient der Verteilung der Kunststoffschmelze und der Sicherung von Mundstücken 30, die sternförmig in einer separat zum Düsenkörper bzw. zum Materialrohr 20 ausgebildeten Aufnahmeeinrichtung 50 eingesetzt sind. Die Verteilereinrichtung 40 weist weiterhin einen Sockelabschnitt 42 auf, der in die Aufnahmeeinrichtung 50 einsetzbar ist.

Die Aufnahmeeinrichtung 50 hat eine nach unten offene Ausnehmung, in welche die Mundstücke 30 und die Verteilereinrichtung 40 eingesetzt werden. Während der Halsabschnitt 41 längsverschieblich in dem Strömungskanal 21 des Materialrohres 20 angeordnet ist, wird der Sockelabschnitt 42 von der Aufnahmeeinrichtung 50 umschlossen. In dieser Aufnahmeeinrichtung 50 sind Radialbohrungen 51 ausgebildet, in welchen Mundstücke 30 angeordnet sind. Die Mundstücke 30 sind quer zur Achse A der Spritzgießdüse 10 ausgerichtet und durch die Verteilereinrichtung 40 mit dem Strömungskanal 21 der Spritzgießdüse 10 strömungsverbunden.

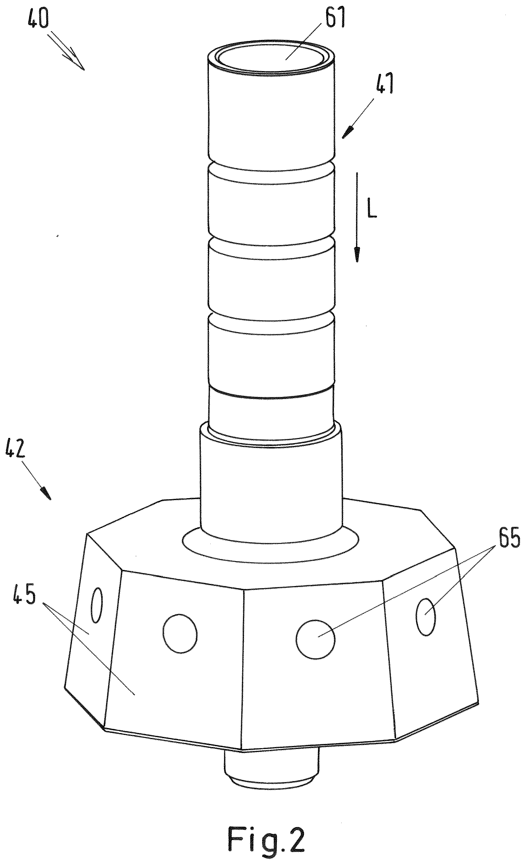

Eine Verteilereinrichtung 40 für die in Figur 1 gezeigte Spritzgießdüse 10 wird nachfolgend im Detail mit Bezug auf die Figuren 2 bis 6 beschrieben.

Wie in den Figuren 2 bis 6 zu sehen ist, entspricht der grundsätzliche Aufbau dem der in Figur 1 dargestellten Verteilereinrichtung 40. Insbesondere stimmen die Form der Verteilereinrichtung 40 sowie die Anordnung der Eintrittsöffnungen 61 sowie der Austrittsöffnungen 65 überein. Es befinden sich also auch bei dieser Verteilereinrichtung 40 die Austrittsöffnungen 65 bezüglich der Längsrichtung L auf einer Höhe.

Die Verteilereinrichtung 40 unterscheidet sich von der vorstehend beschriebenen Verteilereinrichtung 40 gemäß Fig. 1 dadurch, dass die Übergabeöffnungen 63 auf unterschiedlichen Höhen bezüglich der Längsrichtung L angeordnet sind.

In einem inneren Bereich des Sockelabschnittes 42, in dem ein Hauptverteilerkanal 62 liegt, befinden sich an dem Umfang des Hauptverteilerkanals 62 in Längsrichtung L auf einer Höhe vier Verteilerkanäle 64, deren Übergabeöffnungen 63 in einer Ebene 66a liegen.

In Längsrichtung L befinden sich auf einer anderen Höhe auf dem Umfang des Hauptverteilerkanals vier weitere Verteilerkanäle 64, deren Übergabeöffnungen 63 in einer Ebene 66b liegen.

Die Übergabeöffnungen 63 stellen eine Strömungsverbindung zwischen dem Hauptverteilerkanal 62 und dem jeweiligen Verteilerkanal 64 her. Die Austrittsöffnungen 65 in den Seitenflächen 45 des Sockelabschnittes 42 stellen eine Strömungsverbindung zu Mundstücken 30 bzw. zu einer Aufnahmeeinrichtung 50 der Spritzgießdüse 10 her.

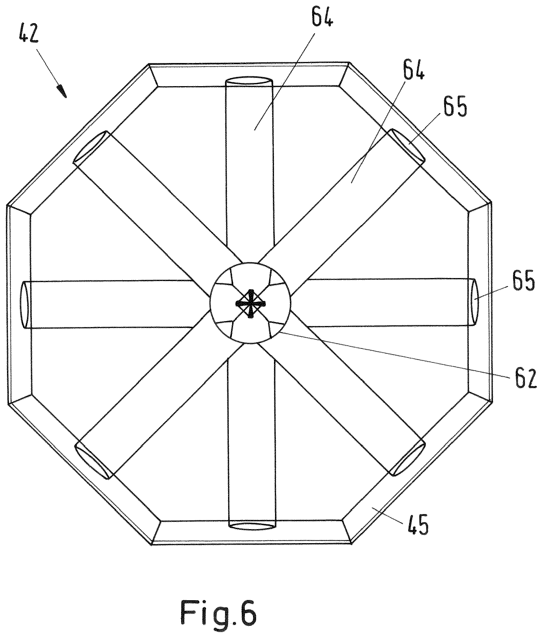

Wie aus Fig. 6 ersichtlich, verlaufen die Verteilerkanäle 64 sternförmig von dem Hauptverteilerkanal 62, in den sie mit den Übergabeöffnungen 63 münden. Die Verteilerkanäle 64 verlaufen dann weiter zu den Austrittsöffnungen 65, die in den Seitenflächen 45 des Sockelabschnittes 42 ausgebildet sind.

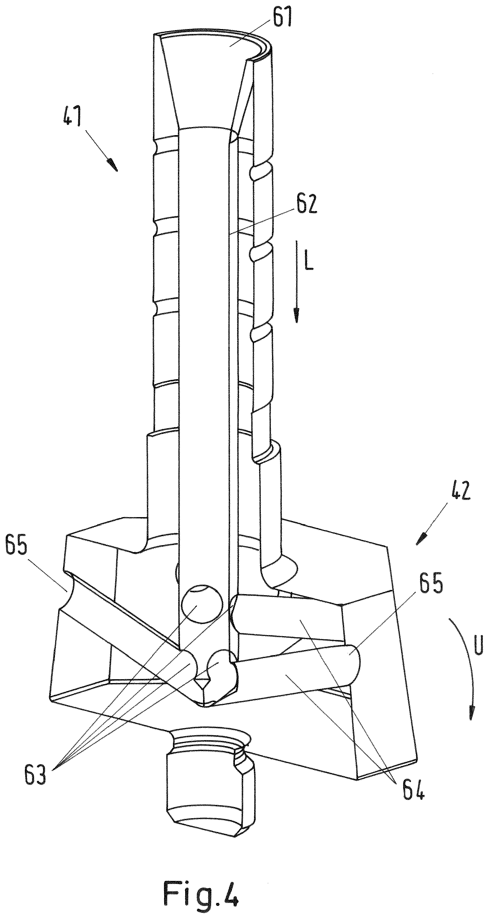

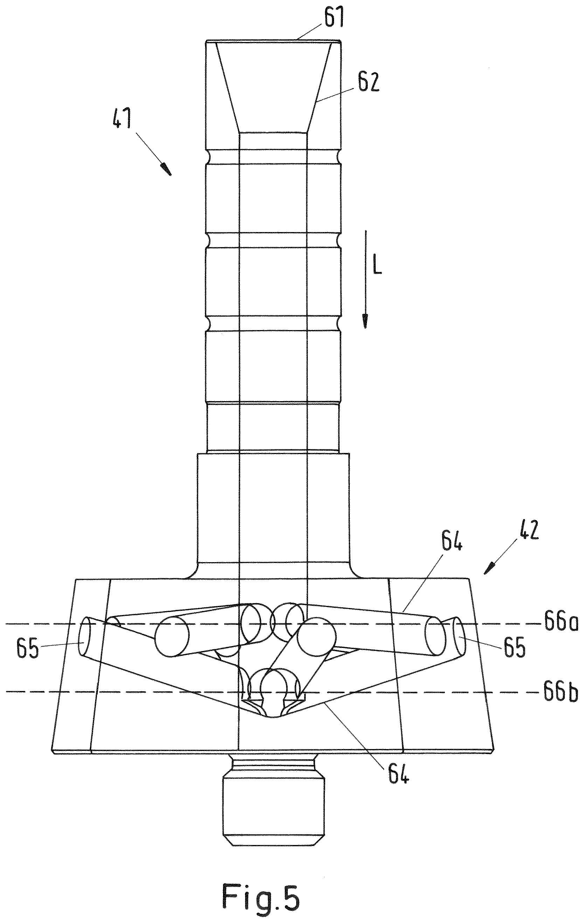

Wie insbesondere in den Figuren 4 und 5 zu sehen ist, sind die Übergabeöffnungen in zwei verschiedenen Höhen, also auf zwei, senkrecht zur Längsrichtung L angeordneten Ebenen 66a, 66b, angeordnet. Die Übergabeöffnungen 63 sind dabei in Umfangsrichtung U abwechselnd in einer Ebene 66a der beiden Ebenen 66a, 66b und in der anderen Ebene 66b angeordnet, so dass in Umfangsrichtung U benachbarte Übergabeöffnungen 63 nicht auf einer Höhe bezüglich der Längsrichtung L angeordnet sind.

Dadurch weist die Verteilereinrichtung 40 zwischen benachbarten Verteilerkanälen 64 insbesondere in dem inneren Bereich des Sockelabschnittes 42 eine größere Wandstärke auf, so dass die Verteilereinrichtung 40 stabiler ausgebildet ist und beispielsweise höheren Drücken standhalten kann.

Die Ebenen 66a, 66b sind parallel zueinander, so dass die Übergabeöffnungen 63 auf genau zwei Höhen bezüglich der Längsrichtung L angeordnet sind. Alternativ können die Ebenen 66a, 66b aber auch zur Längsrichtung L geneigt sein, insbesondere mit verschiedenen Winkeln zur Längsrichtung L.

Des Weiteren ist die Ebene, in der sich die Austrittsöffnungen 65 befinden, parallel zu den Ebenen 66a, 66b, so dass die Abstände der Austrittsöffnungen 65 zu den jeweiligen Ebenen 66a, 66b in Längsrichtung L jeweils gleich groß sind. Die Abstände der Austrittsöffnungen 65 zur ersten Ebene 66a können dabei von den Abständen der Austrittsöffnungen 65 zur zweiten Ebene 66b abweichen.

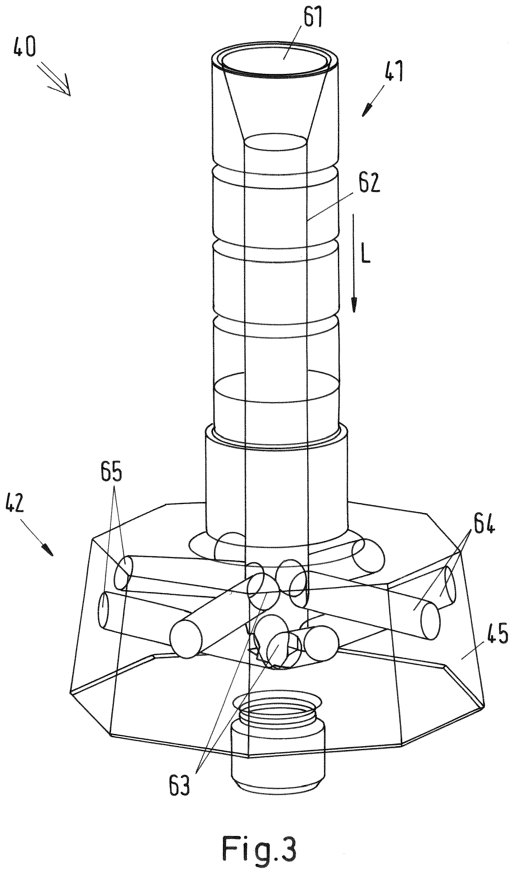

Des Weiteren können die Verteilerkanäle 64, deren Übergabeöffnungen 63 in der ersten Ebene 66a bzw. der zweiten Ebene 66b angeordnet sind, zur Längsrichtung L bzw. zu den Ebenen 66a, 66b in unterschiedlichen Winkeln geneigt sein (siehe insbesondere Figuren 3 bis 5).

Wie insbesondere in Figur 2 zu sehen ist, sind die Seitenflächen 45 zur Längsrichtung L geneigt, so dass die Verteilereinrichtung 40 entgegen der Längsrichtung L konisch zulaufend ausgebildet ist.

Davon abweichend können die Seitenflächen 45 auch in Längsrichtung L verlaufen, so dass die Verteilereinrichtung 40 in Längsrichtung L zumindest abschnittsweise einen gleichbleibenden Querschnitt aufweist.

Die Erfindung ist nicht auf eine der vorbeschriebenen Ausführungsformen beschränkt, sondern in vielfältiger Weise abwandelbar. So kann beispielsweise eine Verteilereinrichtung 40 mit dem vorstehend beschriebenen Aufbau, bei dem die Übergabeöffnungen 6 in wenigstens zwei Ebenen 66a, 66b in den Hauptverteilerkanal 62 münden, auch für andere Spritzgießdüsen bzw. Spritzgießwerkzeuge verwendet werden, z.B. für eine Kaltkanaldüse. Außerdem können mehr als zwei Ebenen 66a, 66b für die Übergabeöffnungen 63 vorgesehen sein, wobei in jeder Ebene 66a, 66b der Übergabeöffnungen 63 nicht notwendigerweise vier Übergabeöffnungen 63 liegen, sondern eine beliebige Anzahl von Übergabeöffnungen 63.

In einer weiteren Ausgestaltung müssen die Austrittsöffnungen 65 nicht allesamt auf einer Ebene liegen. Die Austrittsöffnungen 65 können beliebig auf den Seitenflächen 45 des Sockelabschnitts 42 positioniert sein. Insbesondere müssen diese auch nicht gleichmäßig verteilt angeordnet sein.

Die Übergabeöffnungen 63 können des Weiteren auch auf mehr als zwei Höhen bezüglich der Längsrichtung L angeordnet sein. Vorteilhaft ist es, wenn zwei in Umfangsrichtung U benachbarte Übergabeöffnungen 63 nicht auf einer Höhe liegen, so dass sich die Öffnungen 63 nicht überlappen und zwischen den Verteilerkanälen 64 eine ausreichende Wandstärke vorhanden ist.

Die Austrittsöffnungen 65 können ferner Aufnahmen aufweisen, in welchen die Mundstücke 30 der Spritzgießdüse fixiert werden können.

Man erkennt, dass eine Verteilereinrichtung 40 für eine Spritzgießdüse 10 für ein Spritzgießwerkzeug einen sich von einer Eintrittsöffnung 61 in die Verteilereinrichtung 40 bis zu wenigstens zwei Übergabeöffnungen 63 erstreckenden Hauptverteilerkanal 62 für eine Spritzgießmasse hat sowie zumindest zwei sich jeweils von einer Übergabeöffnung 63 zu einer Austrittsöffnung 65 erstreckenden Verteilerkanäle 64 für die Spritzgießmasse, die jeweils mit einer Übergabeöffnung 63 mit dem Hauptverteilerkanal 62 strömungsverbunden sind. Um die Stabilität der Verteilereinrichtung zu erhöhen und um die Strömungsverhältnisse innerhalb der Verteilereinrichtung zu verbessern, sieht die Erfindung vor, dass die Übergabeöffnungen 63 in Längsrichtung L des Hauptverteilerkanals 62 auf wenigstens zwei unterschiedlichen Höhen in den Hauptverteilerkanal 62 münden.

Eine Spritzgießdüse 10 für ein Spritzgießwerkzeug, hat einen Düsenkörper 20 und wenigstens zwei Mundstücke 30, die jeweils über wenigstens eine Austrittsöffnung mit einer in einem Formeinsatz ausgebildeten Formkavität des Spritzgießwerkzeugs strömungsverbunden sind, wobei in dem Düsenkörper ein Strömungskanal für eine zu verarbeitende Spritzgießmasse ausgebildet ist, sowie eine vorstehend beschriebene Verteilereinrichtung, wobei der Strömungskanal in den Hauptverteilerkanal der Verteilereinrichtung mündet und die Verteilerkanäle jeweils in einem Mundstück 30 münden.

**Bezugszeichenliste**

| | | | |
|---|---|---|---|
| 10 | Spritzgießdüsen | 50 | Aufnahmeeinrichtung |
| 12 | Gehäuse | 51 | Radialbohrungen |
| 16 | Schaft | 61 | Eintrittsöffnung |
| 20 | Düsenkörper | 62 | Hauptverteilerkanal |
| 21 | Strömungskanal | 63 | Übergabeöffnung |
| 23 | Dichtring | 65 | Austrittsöffnung |
| 24 | Materialzufuhröffnung | 66a | erste Ebene |
| 30 | Mundstück | 66b | zweite Ebenen |
| 40 | Verteilereinrichtung | | |
| 41 | Halsabschnitt | L | Längsrichtung |
| 42 | Sockelabschnitt | U | Umfangsrichtung |

## Patentansprüche

1. Verteilereinrichtung (40) für eine Spritzgießdüse (10) für ein Spritzgießwerkzeug, mit einem sich von einer Eintrittsöffnung (61) in die Verteilereinrichtung (40) bis zu wenigstens zwei Übergabeöffnungen (63) erstreckenden Hauptverteilerkanal (62) für eine Spritzgießmasse und zumindest zwei sich jeweils von einer Übergabeöffnung (63) zu einer Austrittsöffnung (65) erstreckenden Verteilerkanälen (64), die jeweils mit einer Übergabeöffnung (63) mit dem Hauptverteilerkanal (62) strömungsverbunden sind,
▪ wobei die Übergabeöffnungen (63) in Längsrichtung (L) des Hauptverteilerkanals (62) auf wenigstens zwei unterschiedlichen Höhen in den Hauptverteilerkanal (62) münden, und
▪ wobei die Übergabeöffnungen (63) auf zwei in Längsrichtung (L) des Hauptverteilerkanals (62) voneinander beabstandeten Ebenen (66a, 66b) in den Hauptverteilerkanal (62) münden,
**dadurch gekennzeichnet, dass** sich die Austrittsöffnungen (65) in Längsrichtung (L) des Hauptverteilerkanals (62) zwischen den Ebenen (66a, 66b) der Übergabeöffnungen (63) befinden.

2. Verteilereinrichtung nach Anspruch 1, **dadurch gekennzeichnet, dass** in Umfangsrichtung (U) benachbarte Übergabeöffnungen (63) auf verschiedenen Höhen in den Hauptverteilerkanal (62) münden.

3. Verteilereinrichtung nach Anspruch 1, **dadurch gekennzeichnet, dass** sich die Übergabeöffnungen (63) auf dem Innenumfang des Hauptverteilerkanals nicht überlappen.

4. Verteilereinrichtung nach Anspruch 1 oder 2, **dadurch gekennzeichnet, dass** die Anzahl der Übergabeöffnungen (63), die jeweils auf einer Ebene (66a, 66b) in den Hauptverteilerkanal (62) münden, gleich groß ist.

5. Verteilereinrichtung nach einem der Ansprüche 1 bis 3, **dadurch gekennzeichnet, dass** die Ebenen (66a, 66b), in welchen die Übergabeöffnungen (63) in den Hauptverteilerkanal (62) münden, parallel zueinander angeordnet sind.

6. Verteilereinrichtung nach einem der Ansprüche 1 bis 5, **dadurch gekennzeichnet, dass** die Ebenen (66a, 66b) senkrecht zur Längsrichtung (L) des Hauptverteilerkanals (62) angeordnet sind.

7. Verteilereinrichtung nach einem der vorhergehenden Ansprüche, **dadurch gekennzeichnet, dass** die Austrittsöffnungen (65) in einer Ebene angeordnet sind.

8. Verteilereinrichtung nach Anspruch 7, **dadurch gekennzeichnet, dass** die Ebene der Austrittsöffnungen (65) senkrecht zur Längsrichtung (L) des Hauptverteilerkanals (62) angeordnet ist.

9. Verteilereinrichtung nach einem der vorhergehenden Ansprüche, **dadurch gekennzeichnet, dass** die Verteilereinrichtung (40) entgegen der Längsrichtung (L) zur Eintrittsöffnung (61) hin konisch zulaufend ausgebildet ist.

10. Verteilereinrichtung nach einem der Ansprüche 1 bis 9, **dadurch gekennzeichnet, dass** die Verteilereinrichtung (40) in Längsrichtung (L) zumindest abschnittsweise einen gleichbleibenden Außenquerschnitt aufweist.

11. Spritzgießdüse (10) für ein Spritzgießwerkzeug, mit einem Düsenkörper (20) und mit wenigstens zwei Mundstücken (30), die jeweils über eine Austrittsöffnung mit einer in einem Formeinsatz ausgebildeten Formkavität des Spritzgießwerkzeugs strömungsverbunden sind, wobei in dem Düsenkörper ein Strömungskanal für eine zu verarbeitende Spritzgießmasse ausgebildet ist, und mit einer Verteilereinrichtung nach einem der vorhergehenden Ansprüche, wobei der Strömungskanal in den Hauptverteilerkanal der Verteilereinrichtung mündet und die Verteilerkanäle jeweils in einem Mundstück (30) münden.

12. Spritzgießdüse nach Anspruch 11, **dadurch gekennzeichnet, dass** die Mundstücke (30) in einer separat vom Düsenkörper ausgebildeten Aufnahmeeinrichtung (50) angeordnet sind und dass die Verteilereinrichtung (40) ein Halteelement bildet, das die Mundstücke (30) lösbar in der separaten Aufnahmeeinrichtung (50) festlegt.

13. Spritzgießdüse nach einem der Ansprüche 11 oder 12, **dadurch gekennzeichnet, dass** die Verteilereinrichtung (40) längsverschieblich in der Aufnahmeeinrichtung (50) angeordnet ist.

14. Spritzgießwerkzeug mit einer Spritzgießdüse (10) nach einem der Ansprüche 11 bis 13.

## Claims

1. Manifold device (40) for an injection moulding nozzle (10) for an injection moulding tool, having a main distribution channel (62) extending from an inlet opening (61) in the manifold device (40) to at least two delivery openings (63) for an injection moulding compound and at least two distribution channels (64) each extending from a delivery opening (63) to an outlet opening (65), which are each fluidly connected to a delivery opening (63) to the main distribution channel (62),
- wherein the delivery openings (63) open into the main distribution channel (62) in a longitudinal direction (L) to the main distribution channel (62) at at least two different heights and
- wherein the delivery openings (63) open into the main distribution channel (62) in two planes (66a, 66b) spaced apart from each other in a longitudinal direction (L) to the main distribution channel (62),
**characterised in that** the outlet openings (65) in a longitudinal direction (L) to the main distribution channel (62) are located between the planes (66a, 66b) of the delivery openings (63).

2. Manifold device according to claim 1, **characterised in that** adjacent delivery openings (63) in a circumferential direction (U) open into the main distribution channel (62) at different heights.

3. Manifold device according to claim 1, **characterised in that** the delivery openings (63) do not overlap on the inner circumference of the main distribution channel.

4. Manifold device according to claim 1 or 2, **characterised in that** the number of delivery openings (63), which each open into the main distribution channel (62) on a plane (66a, 66b), is the same.

5. Manifold device according to any of the claims 1 to 3, **characterised in that** the planes (66a, 66b), in which the delivery openings (63) open into the main distribution channel (62), are arranged parallel to each other.

6. Manifold device according to any of the claims 1 to 5, **characterised in that** the planes (66a, 66b) are arranged perpendicular to the longitudinal direction (L) of the main distribution channel (62).

7. Manifold device according to any of the preceding claims, **characterised in that** the outlet openings (65) are arranged in a plane.

8. Manifold device according to claim 7, **characterised in that** the plane of the outlet openings (65) is arranged perpendicular to the longitudinal direction (L) of the main distribution channel (62).

9. Manifold device according to any of the preceding claims, **characterised in that** the manifold device (40) is designed to taper conically towards the inlet opening (61) counter to the longitudinal direction (L).

10. Manifold device according to any of the claims 1 to 9, **characterised in that** the manifold device (40) has a constant outer cross-section, at least in sections, in a longitudinal direction (L).

11. Injection moulding nozzle (10) for an injection moulding tool, having a nozzle body (20) and at least two mouthpieces (30), which are each fluidly connected via an outlet opening to a mould cavity of the injection moulding formed in a mould insert, wherein a flow channel for an injection moulding compound to be processed is formed in the nozzle body, and having a manifold device according to any of the preceding claims, wherein the flow channel opens into the main distribution channel of the manifold device and the distribution channels each open into a mouthpiece (30).

12. Injection moulding nozzle according to claim 11, **characterised in that** the mouthpieces (30) are arranged in a receiving device (50) formed separately from the nozzle body and that the manifold device (40) forms a retaining element, which fixes the mouthpieces (30) releasably in the separate receiving device (50).

13. Injection moulding nozzle according to any of the claims 11 or 12, **characterised in that** the manifold device (40) is arranged longitudinally displaceably in the receiving device (50).

14. Injection moulding tool having an injection moulding nozzle (10) according to any of the claims 11 to 13.

## Revendications

1. Dispositif de distributeur (40) pour une buse de moulage par injection (10) pour un outil de moulage par injection, avec un canal de distributeur principal (62) pour une masse de moulage par injection, qui s'étend d'une ouverture d'entrée (61) dans le dispositif de distributeur (40) jusqu'à au moins deux ouvertures de transfert (63) et au moins deux canaux de distributeur (64) s'étendant chacun d'une ouverture de transfert (63) jusqu'à une ouverture de sortie (65), qui sont chacun en liaison d'écoulement avec le canal de distributeur principal (62) par une ouverture de transfert (63),
▪ dans lequel les ouvertures de transfert (63) débouchent dans le canal de distributeur principal (62) à au moins deux hauteurs différentes dans le sens longitudinal (L) du canal de distributeur principal (62), et
▪ dans lequel les ouvertures de transfert (63) débouchent dans le canal de distributeur principal (62) à deux plans (66a, 66b) espacés l'un de l'autre dans le sens longitudinal (L) du canal de distributeur principal (62),
**caractérisé en ce que** les ouvertures de sortie (65) sont situées dans le sens longitudinal (L) du canal de distributeur principal (62) entre les plans (66a, 66b) des ouvertures de transfert (63).

2. Dispositif de distributeur selon la revendication 1, **caractérisé en ce que** des ouvertures de transfert (63) adjacentes dans la direction circonférentielle (U) débouchent dans le canal de distributeur principal (62) à différentes hauteurs.

3. Dispositif de distributeur selon la revendication 1, **caractérisé en ce que** les ouvertures de transfert (63) ne se chevauchent pas sur la circonférence intérieure du canal de distributeur principal.

4. Dispositif de distributeur selon la revendication 1 ou 2, **caractérisé en ce que** le nombre d'ouvertures de transfert (63) qui débouchent chacune dans le canal de distributeur principal (62) à un plan (66a, 66b) est égal.

5. Dispositif de distributeur selon l'une quelconque des revendications 1 à 3, **caractérisé en ce que** les plans (66a, 66b) dans lesquels les ouvertures de transfert (63) débouchent dans le canal de distributeur principal (62) sont disposés parallèlement les uns aux autres.

6. Dispositif de distributeur selon l'une quelconque des revendications 1 à 5, **caractérisé en ce que** les plans (66a, 66b) sont disposés perpendiculairement à la direction longitudinale (L) du canal de distributeur principal (62).

7. Dispositif de distributeur selon l'une quelconque des revendications précédentes, **caractérisé en ce que** les ouvertures de sortie (65) sont disposées dans un plan.

8. Dispositif de distributeur selon la revendication 7, **caractérisé en ce que** le plan des ouvertures de sortie (65) est disposé perpendiculairement à la direction longitudinale (L) du canal de distributeur principal (62).

9. Dispositif de distributeur selon l'une quelconque des revendications précédentes, **caractérisé en ce que** le dispositif de distributeur (40) est conçu pour se rétrécir de manière conique dans le sens longitudinal (L) vers l'ouverture d'entrée (61).

10. Dispositif de distributeur selon l'une quelconque des revendications 1 à 9, **caractérisé en ce que** le dispositif de distributeur (40) présente une section transversale extérieure constante dans la direction longitudinale (L) au moins par sections.

11. Buse de moulage par injection (10) pour un outil de moulage par injection, avec un corps d'injecteur (20) et avec au moins deux embouts (30) qui sont chacun reliés par une ouverture de sortie à une cavité de l'outil de moulage par injection formée dans un insert de moule, dans lequel un canal d'écoulement pour une masse de moulage par injection à traiter est formé dans le corps de buse, et avec un dispositif de distributeur selon l'une quelconque des revendications précédentes, dans lequel le canal d'écoulement débouche dans le canal de distributeur principal du dispositif de distributeur et les canaux de distributeur débouchent chacun dans un embout (30).

12. Buse de moulage par injection selon la revendication 11, **caractérisée en ce que** les embouts (30) sont disposés dans un dispositif de réception (50) formé séparément du corps de buse et **en ce que** le dispositif de distributeur (40) forme un élément de maintien qui fixe de manière amovible les embouts (30) dans le dispositif de réception (50) séparé.

13. Buse de moulage par injection selon l'une quelconque des revendications 11 ou 12, **caractérisée en ce que** le dispositif de distributeur (40) est disposé de manière à pouvoir être déplacé longitudinalement dans le dispositif de réception (50).

14. Outil de moulage par injection avec une buse de moulage par injection (10) selon l'une quelconque des revendications 11 à 13.
